# EUROPÄISCHE PATENTSCHRIFT

(11) **EP 2 601 076 B1**
(45) Veröffentlichungstag und Bekanntmachung des Hinweises auf die Patenterteilung: **23.03.2016**
(21) Anmeldenummer: 11732471.5
(22) Anmeldetag: 15.07.2011
(51) Int. Cl.: B60R 1/06, B62D 35/00

(54) **AUSSENSPIEGEL EINES KRAFTFAHRZEUGS**
EXTERIOR MIRROR OF A MOTOR VEHICLE
RÉTROVISEUR EXTÉRIEUR D'UN VÉHICULE AUTOMOBILE

(30) Priorität: 02.08.2010 DE 102010038785
(43) Veröffentlichungstag der Anmeldung: 12.06.2013
(73) Patentinhaber: Bayerische Motoren Werke Aktiengesellschaft, 80809 München (DE)
(72) Erfinder: OSWALD, Roland, 85283 Wolnzach (DE)
(86) Internationale Anmeldenummer: PCT/EP2011/062167
(87) Internationale Veröffentlichungsnummer: WO 2012/016806

(56) Entgegenhaltungen:
- DE-A1- 2 310 429
- DE-B- 1 028 898
- DE-U- 1 929 904

## Beschreibung

Die Erfindung betrifft einen Außenspiegel eines Kraftfahrzeugs, mit den im Oberbegriff des Patentanspruches 1 angegebenen Merkmalen.

Ein derartiger Außenspiegel dürfte in der DE-AS 1028898 durch eine Variante gebildet sein, bei der ein Luftleitring mit einem einen Luftspalt bildenden Abstand das Spiegelgehäuse des Außenspiegels umgibt und über mehrere Stege fest mit dem Spiegelgehäuse verbunden sein dürfte. Wie das Spiegelgehäuse an einer Fahrzeugwand befestigt ist, kann der Veröffentlichung nicht entnommen werden. Der Rückblickspiegel bzw. das Spiegelglas des Außenspiegels dürfte wie bei dem zweiten Ausführungsbeispiel dieser Veröffentlichung fest mit dem Spiegelgehäuse verbunden sein. Bei diesem zweiten Ausführungsbeispiel sind ein verlängerter Luftleitring und das Spiegelgehäuse über eine Feder-/Schraubenverbindung winkeleinstellbar mit einem an der Karosserie befestigten Spiegelfuß verbunden, so dass durch ein winkelmäßiges Verstellen des Spiegelgehäuses der fest mit dem Spiegelgehäuse verbundene Rückblickspiegel in eine zur Einsicht des seitlichen Verkehrs günstige Winkellage manuell eingestellt werden kann. Damit bei dem ersten Ausführungsbeispiel, bei dem der Luftleitring fest mit dem Spiegelgehäuse verbunden sein dürfte, der Rückblickspiegel ebenfalls winkeleinstellbar ist, dürfte das Spiegelgehäuse wie bei dem zweiten Ausführungsbeispiel, bei dem der Luftleitring verlängert ist, über eine Feder-/Schraubenverbindung winkeleinstellbar mit einem Spiegelfuß verbunden sein. Die günstige Winkellage ist individuell einzustellen und von der Höhe und Längsposition des Fahrzeugsitzes abhängig, auf dem sich eine im Fahrgastraum des Fahrzeugs vorne sitzende Person befindet, die über den Außenspiegel den seitlichen Verkehr beobachtet. Ist das Spiegelgehäuse auf eine günstige Winkellage eingestellt, kann sich das Spiegelgehäuse in einer aerodynamisch ungünstigen Position befinden, in der ein beispielsweise durch den Luftspalt zwischen dem Luftleitring und dem Spiegelgehäuse strömender Luftstrom Luft- bzw. Pfeifgeräusche verursacht und/oder der Luftwiderstand des Außenspiegels erhöht ist. Bei dem zweiten Ausführungsbeispiel kann beim Winkeleinstellen des Spiegelgehäuses der separat winkeleinstellbare Luftleitring versehentlich in eine Winkellage eingestellt werden, in der ein durch den Luftspalt zwischen dem Luftleitring und dem Spiegelgehäuse strömender Luftstrom Luft- bzw. Pfeifgeräusche verursacht und/oder der Luftwiderstand des Luftleitringes erhöht ist. Auch dem Luftleitring kann nicht oder nicht ohne weiteres angesehen werden, ob er sich in einer aerodynamisch günstigen Lage befindet. An dem Fahrzeug vorbei gehende Personen können unachtsam bzw. versehentlich das Spiegelgehäuse und den Luftleitring gemeinsam oder bei getrennter anordnung unabhängig voneinander verstellen, so dass in diesem Fall der am Spiegelgehäuse befestigte Rückblickspiegel durch zumindest ein Winkeleinstellen des Spiegelgehäuses erneut in eine günstige Winkellage einzustellen ist. Im Fahrbetrieb auf den Luftleitring und/oder das Spiegelgehäuse beispielsweise mit größerer Geschwindigkeit aufschlagende Körper, beispielsweise größere Regentropfen oder Hagelkörner, können eventuell den Luftleitring bzw. das Spiegelgehäuse derart verstellen, dass eine Einsichtnahme des seitlichen Verkehrs über den Außenspiegel nicht möglich oder eingeschränkt ist.

In der EP 0 114 130 A1 ist ein fernbetätigbarer Rückspiegel eines Kraftfahrzeugs mit einem feststehenden Spiegelgehäuse und einem Spiegel beschrieben, der an seinem Umfang mit einem abdichtenden und eine winkelmäßige Ausrichtung des Spiegels ermöglichenden Faltenbalg verbunden ist, der an seinem anderen Randbereich an dem Spiegelgehäuse befestigt ist. Beispielsweise an der nicht wasserdichten Durchführung eines Kabels durch eine Öffnung im vorderen Bereich des Spiegelgehäuses zu einer Spiegelverstelleinrichtung im Spiegelgehäuse und an der aerodynamisch ungünstigen Ausbildung der äußeren Kontur des Faltenbalgs ist erkennbar, dass der Rückspiegel nur ein im Fahrgastraum eines Kraftfahrzeugs angeordneter Innenrückblickspiegel sein kann.

Der Erfindung liegt die Aufgabe zu Grunde, einen Außenspiegel eines Kraftfahrzeugs mit den Merkmalen im Oberbegriff des Patentanspruches 1 anzugeben, der ein unabsichtliches Verstellen des im Spiegelgehäuse angeordneten Rückblickspiegels verhindert oder zumindest erschwert und insbesondere aerodynamisch günstiger ist.

Diese Aufgabe ist durch die Merkmale im Patentanspruch 1 gelöst. Vorteilhafte Ausgestaltungen der Erfindung sind den Unteransprüchen entnehmbar.

Der erfindungsgemäße Außenspiegel eines Kraftfahrzeugs weist ein Spiegelgehäuse auf, das über einen Spiegelfuß an einer Karosseriewand, beispielsweise an einer Fahrzeugtür befestigt ist, mit dem das Spiegelgehäuse fest verbunden ist. Das Spiegelgehäuse ist beispielsweise über Stege fest mit einem Luftleitring verbunden, der unter Bildung eines Luftspalts zwischen dem Luftleitring und dem Spiegelgehäuse einen Bereich des Spiegelgehäuses umgibt, so dass weder der Luftleitring noch der Spiegelfuß verstellbar sind. Der Spiegelfuß ist über eine Lagefindungseinrichtung lagegenau an der Karosseriewänd anzuordnen und über wenigstens ein Befestigungselement an der Karosseriewand zu befestigen ist.

Die Lagefindungseinrichtung weist beispielsweise wenigstens zwei Lagefindungselemente auf, von denen beispielsweise ein Lagefindungselement ein durch eine Durchtrittsöffnung an der Karosseriewand hindurch in eine Stiftöffnung im Spiegelfuß eingesteckter Fixierstift oder eine Befestigungsschraube ist, die durch eine Zentrieröffnung an der Karosseriewand hindurch in ein Gewinde im Spiegelfuß einschraubbar ist. Das Lagefindungselement kann auch ein am Spiegelfuß oder an der Karosseriewand ausgebildetes oder angeordnetes Zentrierelement sein, das mit einem Gegenzentrierelement an dem anderen Teil, an der Karosseriewand oder an dem Spiegelfuß zusammen wirkt. Das Befestigungselement zur Befestigung des Spiegelfußes an der Karosseriewand ist beispielsweise eine Befestigungsschraube, die auch ein Lagefindungselement der Lagefindungseinrichtung sein kann, beispielsweise wenn die durch eine Schraubenöffnung an der Karosseriewand hindurch gesteckte und in ein Gewinde im Spiegelfuß eingeschraubte Befestigungsschraube den Spiegelfuß ausreichend lagegenau zumindest bereichsweise an der Karosseriewand fixiert. Eine Befestigungsschraube oder/oder ein Fixierstift können kostengünstig gefertigt bzw. eingekauft werden. In dem Spiegelfuß kann eine von einer Zuleitungsöffnung in der Karosseriewand in das Spiegelgehäuse mündende Durchgangsöffnung ausgebildet sein, über die eine Stromleitung und/oder wenigstens ein Spiegelverstellelement mit einer manuellen oder motorischen Verstelleinrichtung im Spiegelgehäuse verbunden ist, die aktiviert den Rückblickspiegel verstellt. Auf diese Weise sind sowohl der Luftleitring als auch das Spiegelgehäuse ständig miteinander und mit dem Spiegelfuß fest verbunden und der Spiegelfuß über die Lagefindungseinrichtung weitgehend lagegenau an der Karosseriewand angeordnet und über wenigstens ein Befestigungselement an der Karosseriewand ausreichend stabil befestigt. Der Luftleitring und das Spiegelgehäuse sowie der Spiegelfuß können aerodynamisch günstig ausgebildet und angeordnet sein, wodurch der Luftwiderstand des Außenspiegels entsprechend herab gesetzt ist und störende Luft- und/oder Pfeifgeräusche der den Außenspiegel umströmenden und durch den Luftspalt strömenden Luft zu verhindern oder beispielsweise bei höheren Fahrgeschwindigkeiten so herab gesetzt sind, dass diese nicht oder kaum wahrnehmbar sind und somit auch in diesem Fall akustisch nicht störend wirken können. Bei einem beispielsweise versehentlichen Anstoßen einer Person an dem Außenspiegel des stehenden Kraftfahrzeugs, können weder das Luftleitring noch das Spiegelgehäuse oder der Spiegelfuß verstellt werden. Auch im Fahrbetrieb auf den Luftleitring oder das Spiegelgehäuse bzw. den Spiegelfuß aufschlagende Körper, beispielsweise größere Regentropfen oder Hagelkörner können das Luftleitring und das Spiegelgehäuse sowie den Spiegelfuß nicht verstellen. Ein beispielsweise den Rückblickspiegel des Außenspiegels bildendes Spiegelglas kann über eine Stromleitung und/oder wenigstens ein Spiegelverstelleiement mit einer manuellen oder motorischen Versteileinrichtung im Spiegelgehäuse verbunden sein, die aktiviert den Rückblickspiegel verstellt. Der Rückblickspiegel bzw. das Spiegelglas ist in dem Luftleitring geschützt angeordnet, so dass nicht die Gefahr besteht, dass an dem stehenden Kraftfahrzeug unachtsam vorbei gehenden Personen den Rückblickspiegel bzw. das Spiegelglas des Außenspiegels unachtsam verstellen. Sollte an dem Außenspiegel beispielsweise eine Person von hinten anstoßen, wird diese allenfalls in einen Kontakt mit dem hinteren Randbereich des fest stehenden Luftleitringes kommen, der vorzugsweise über den hinteren Randbereich des Spiegelgehäuses und den Rückblickspiegel nach hinten hervor steht und vorzugsweise gerundet ist, um Verletzungen bei einem Kontakt mit einer Person zu vermeiden. Zwischen dem hinteren Rand des Spiegelgehäuses und dem Umfangsrand des Rückblickspiegels kann ein Faltenbalg angeordnet sein, der einerseits an dem Spiegelgehäuse und andererseits an dem Umfangsrand des Rückblickspiegels befestigt oder abgestützt, beispielsweise verclipst ist. Die aerodynamisch ungünstige Umrissform des Faltenbalgs wirkt sich akustisch nicht oder kaum ungünstig aus, da der vorbei strömende Luftstrom durch den Luftspalt zwischen dem Luftleitring und dem Spiegelgehäuse begrenzt ist und durch eine entsprechende Gestaltung des Luftspalts aerodynamisch optimiert werden kann. Der Faltenbalg ermöglicht eine Anordnung und Ausbildung des Rückblickspiegels, bei der das Spiegelgehäuse und der Faltenbalg von der Sichtseite des Rückblickspiegels her vollständig von dem Rückblickspiegel überdeckt sind und der Luftspalt nicht oder kaum erkennbar ist. Ein Durchblick des Luftspalts kann in einfacher Weise dadurch verhindert sein, dass die den Luftspalt begrenzende Wand des Luftleitringes und die den Luftspalt begrenzende Wand des Spiegelgehäuses entsprechend gleichsinnig gekrümmt ausgebildet sind, die an verschiedenen Stellen einen gleichen Abstand oder verschiedene Abstände aufweisen können. Der hintere Rand des Luftleitrings ist beispielsweise mit einem Abstand hinter dem hinteren Rand des einen seitlichen Rückblickspiegel stützenden Spiegelgehäuses angeordnet.

Ein Ausführungsbeispiel der Erfindung wird anhand einer Zeichnung näher erläutert. Es zeigen
- Fig. 1: eine vereinfachte Ansicht auf die Spiegelfläche eines an einem Kraftfahrzeug verwendbaren Außenspiegels etwa in seiner Montagelage,
- Fig. 2: der Außenspiegel in Fig. 1 in einer Ansicht in Richtung des Pfeiles II in Fig. 1,
- Fig. 3: eine Ansicht auf den etwa in Einbaulage befindlichen Außenspiegels von oben,
- Fig. 4: eine Ansicht auf den etwa in Einbaulage befindlichen Außenspiegel von unten und
- Fig. 5: einen vereinfachten Querschnitt durch den vorderen Bereich des Spiegelgehäuses des in den vorhergehenden Figuren dargestellten Außenspiegels.

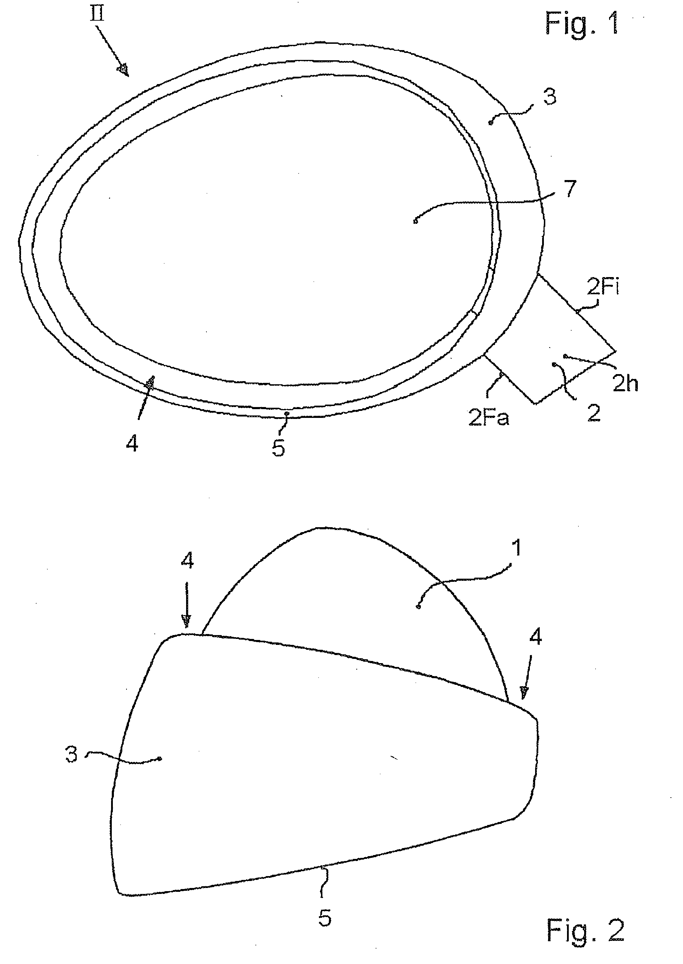

In Figur 1 ist ein Außenspiegel eines Kraftfahrzeugs vereinfacht etwa in seiner Montagelage an der Außenseite eines Kraftfahrzeugs dargestellt, der ein nur in den Figuren 2 bis 5 teilweise erkennbares Spiegelgehäuse 1 aufweist, das über einen in den Figuren 1, 3 und 4 teilweise dargestellten Spiegelfuß 2 an einer Fahrzeugtür des Kraftfahrzeugs befestigt ist und über nicht dargestellte Stege mit einem Luftleitring 3 fest verbunden ist, der unter Bildung eines Luftspalts 4 zwischen dem Luftleitring 3 und dem Spiegelgehäuse 1 einen Bereich des Spiegelgehäuses 1 umgibt.

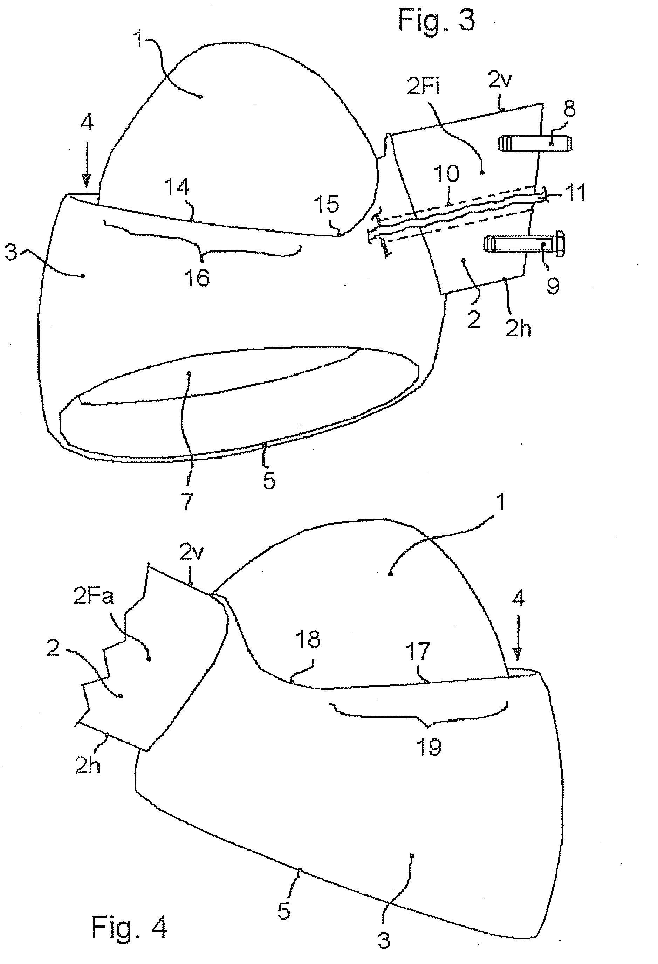

Der hintere Rand 5 des Luftleitringes 3 ist mit einem Abstand hinter dem hinteren Rand 6 des einen seitlichen Rückblickspiegel 7 stützenden Spiegelgehäuses 1 angeordnet. Der Luftleitring 3 und der Spiegelfuß 2 sind fest miteinander verbunden. Der Spiegelfuß 2 ist über einen in Fig. 3 dargestellten Fixierstift 8 und eine in Fig. 3 dargestellte Befestigungsschraube 9 an der Fahrzeugtür befestigt. In dem Spiegelfuß 2 ist eine von einer nicht dargestellten Zuleitungsöffnung in der Fahrzeugtür durch den Luftleitring 3 und einen nicht dargestellten Steg in das Spiegelgehäuse 1 mündende Durchgangsöffnung 10 ausgebildet, die in Fig. 3 durch eine unterbrochene Umrisslinie vereinfacht dargestellt ist. Über die Durchgangsöffnung 10 ist eine in Fig. 3 erkennbare Stromleitung 11 mit einer nicht dargestellten motorischen Verstelleinrichtung im Spiegelgehäuse 1 verbunden, die aktiviert den Rückblickspiegel 7 in eine gewünschte Winkellage um ein oder mehrere reelle oder virtuelle Schwenkachsen verstellt.

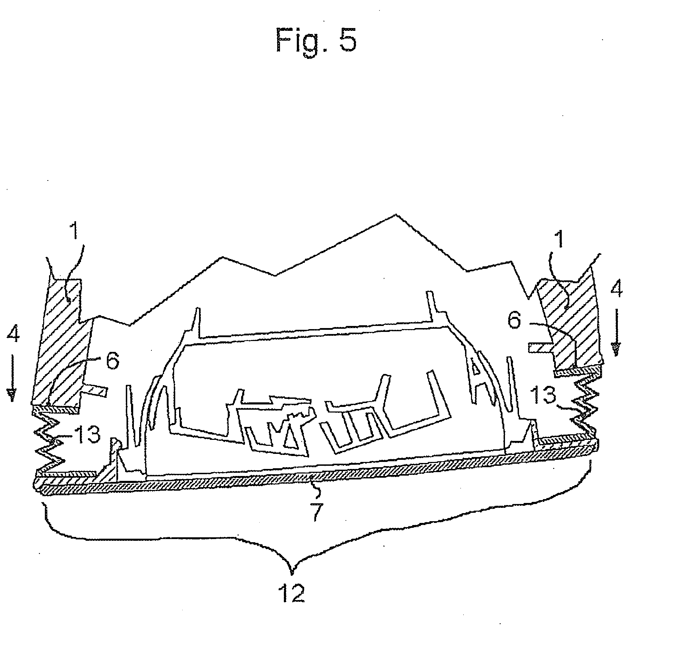

Der winkelmäßig in eine Mittellage eingestellte Rückblickspiegel 7 ist jeweils in normaler Fahrtrichtung des Kraftfahrzeugs mit einem Abstand hinter dem hinteren Rand 6 des Spiegelgehäuses und mit einem Abstand vor dem hinteren Rand 5 des Luftleitringes 3 angeordnet. Wie insbesondere Fig. 5 zu entnehmen ist, weist der Rückblickspiegel 7 eine etwa dem Umriss des hinteren Randes 6 des Spiegelgehäuses 1 entsprechende Spiegelfläche 12 auf.

Fig. 5 ist zu entnehmen, dass zwischen dem hinteren Rand 6 des Spiegelgehäuses 1 und dem Umfangsrand des Rückblickspiegels 7 ein Faltenbalg 13 angeordnet ist, der einerseits an dem Spiegelgehäuse 1 und andererseits an dem Umfangsrand des Rückblickspiegels 7 befestigt oder abgestützt, beispielsweise verclipst ist.

Mit Bezug auf die Figuren 3 und 4 ist darauf hingewiesen, dass bei dem Ausführungsbeispiel der Spiegelfuß 2 an seinem vorderen Rand 2v etwa halbzylinderförmig mit einem großen Radius und an seinem hinteren Rand 2h etwa halbzylinderförmig mit einem kleinen Radius ausgebildet ist. Der etwa halbzylinderförmige vordere Rand 2v des Spiegelfußes 2 und der etwa halbzylinderförmige hintere Rand 2h des Spiegelfußes 2 sind seitlich innen und außen jeweils über ein etwa ebenes Flächenteil 2Fi bzw. 2Fa verbunden.

Den Figuren 3 und 4 ist auch entnehmbar, dass der Luftleitring 3 an einem oberen vorderen Randbereich eine kerbförmige Ausnehmung 14 mit einem gerundeten Kerbgrund 15 und an einem unteren vorderen Randbereich eine kerbförmige Ausnehmung 17 mit einem gerundeten Kerbgrund 18 aufweist. Bei dem Ausführungsbeispiel ist der seitlich außen an den Kerbgrund 15 angrenzende Bereich 16 der kerbförmigen Ausnehmung 14 etwa gerade ausgebildet und seitlich nach außen und vorne gerichtet in einem spitzen Winkel zu einer ideellen Fahrzeugquerachse angeordnet. In dazu vergleichbarer Weise ist bei dem Ausführungsbeispiel der seitlich außen an den Kerbgrund 18 angrenzende Bereich 19 der kerbförmigen Ausnehmung 17 etwa gerade ausgebildet und seitlich nach außen und vorne gerichtet in einem spitzen Winkel zu einer ideellen Fahrzeugquerachse angeordnet. Durch einen Vergleich der Figuren 3 und 4 ist erkennbar, dass bei dem Ausführungsbeispiel der obere Abstand des Kerbgrundes 15 von dem hinteren Randbereich 5 des Luftleitringes 3 kleiner als der untere Abstand des Kerbgrundes 18 von dem hinteren Randbereich 5 des Luftleitringes 3 ist.

Den Figuren 2, 3 und 4 ist entnehmbar, dass das Spiegelgehäuse 1 nach oben und unten und nach vorne konvex gekrümmt ausgebildet ist. Der Luftleitring 3 ist zumindest bereichsweise oder insgesamt im Bereich des Luftspalts 4 an die Kontur des Spiegelgehäuses 1 angepasst.

Die Erfindung kann selbstverständlich von dem einzigen Ausführungsbeispiel abweichend ausgeführt werden. Die Anzahl der Stege, über die der Luftleitring das Spiegelgehäuse stützt, ist an sich beliebig vorgebbar. Der Spiegelfuß ist über eine Lagefindungseinrichtung weitgehend lagegenau an der Karosseriewand anzuordnen und über wenigstens ein Befestigungselement an der Karosseriewand zu befestigen. Die Lagefindungseinrichtung kann sehr unterschiedlich ausgebildet sein und beispielsweise wenigstens zwei Lagefindungselemente aufweisen. Beispielsweise ist ein Lagefindungselement ein durch eine Durchtrittsöffnung an der Karosseriewand hindurch in eine Stiftöffnung im Spiegelfuß eingesteckter Fixierstift oder eine Befestigungsschraube, die durch eine Zentrieröffnung an der Karosseriewand hindurch in ein Gewinde im Spiegelfuß einschraubbar ist. Die Lagefindungseinrichtung kann auch ein am Spiegelfuß oder an der Karosseriewand ausgebildetes oder angeordnetes Zentrierelement aufweisen, das mit einem Gegenzentrierelement an dem anderen Teil, an der Karosseriewand oder an dem Spiegelfuß zusammen wirkt. Das Befestigungselement kann sehr unterschiedlich beispielsweise durch eine Befestigungsschraube (9) gebildet sein. Die Befestigungsschraube kann auch ein Lagefindungselement der Lagefindungseinrichtung sein. Die Karosseriewand kann durch eine beliebige geeignete Oberfläche des Fahrzeugs, beispielsweise einer seitlichen vorderen Fahrzeugtür sein. In dem Spiegelfuß kann eine von einer Zuleitungsöffnung in der Fahrzeugtür durch den Luftleitring und einen Steg in das Spiegelgehäuse mündende Durchgangsöffnung ausgebildet sein, über die eine Stromleitung und/- oder wenigstens ein Spiegelverstellelement mit einer manuellen oder motorischen Verstelleinrichtung im Spiegelgehäuse verbunden ist, die aktiviert den Rückblickspiegel verstellt. Der Rückblickspiegel kann auch eine von dem Umriss des hinteren Randes des Spiegelgehäuses abweichende Spiegelfläche aufweisen. Eine Verwendung eines Faltenbalgs zwischen dem hinteren Rand des Spiegelgehäuses und dem Umfangsrand des Rückblickspiegels kann auch entfallen oder durch eine andere Abdeckung ersetzt sein. Die Umrissform des Spiegelfußes kann von dem Ausführungsbeispiel abweichend gebildet sein. Die bei dem Ausführungsbeispiel vorgesehenen kerbförmigen Ausnehmungen in der Kontur des Luftleitringes können einzeln oder insgesamt entfallen oder durch andere Umrissformen gebildet sein. Das Spiegelgehäuse kann eine von dem Ausführungsbeispiel abweichende Form mit zumindest bereichsweise ebenen und/oder gekrümmten inneren bzw, äußeren Oberflächen gebildet sein. Der Luftleitring kann sich beispielsweise etwa über 30 bis 70 % der Länge des Spiegelgehäuses in Fahrtrichtung des Kraftfahrzeugs erstrecken. In der mittleren Winkellage des Rückblickspiegels ist der hintere Rand des Luftleitringes beispielsweise etwa 5 bis 30 mm hinter dem Rückblickspiegel angeordnet. Im Bereich des Luftspalts kann der Abstand zwischen dem Luftleitring und der beachbarten Fläche des Spiegelgehäuses beispielsweise etwa 5 bis 10 mm aufweisen. Der Luftleitring kann beispielsweise an seinem vorderen und hinteren Randbereich einen zur Umgebung konvexen Radius von wenigstens 2,5 mm aufweisen. Das Spiegelgehäuse kann wenigstens zwei Spiegelgehäuseteile aufweisen, die miteinander beispielsweise über eine Clipverbindung lösbar verbunden sind, von denen ein Spiegelgehäuseteil mit dem Spiegelfuß fest verbunden ist. Dies erleichtert beispielsweise eine Montage und Demontage von im Spiegelgehäuse angeordneten Bauteilen, wenn beispielsweise lediglich ein nicht mit dem Spiegelfuß verbundenes Spiegelgehäuseteil von dem mit dem Spiegelfuß verbundenen Spiegelgehäuseteil abgenommen ist. Der Luftleitring und der Spiegelfuß können fest miteinander verbunden oder zumindest zueinander fixiert sein. Die Fixierung kann derart erfolgen, dass bei einer größeren, beispielsweise unfallbedingt wirkenden Kraft auf das Spiegelgehäuse und/oder den Luftleitring das Spiegelgehäuse zusammen mit dem Luftleitring gegenüber zumindest einen Bereich des Spiegelfußes nachgebend verschwenken können.

## Patentansprüche

1. Außenspiegel eines Kraftfahrzeugs, mit einem Spiegelgehäuse (1), das über einen Spiegelfuß (2) an einer Karosseriewand befestigt ist und über Stege mit einem Luftleitring (3) verbunden ist, der unter Bildung eines Luftspalts (4) zwischen dem Luftleitring (3) und dem Spiegelgehäuse (1) einen Bereich des Spiegelgehäuses (1) umgibt, wobei der hintere Rand (5) des Luftleitrings (3) mit einem Abstand hinter dem hinteren Rand (6) des einen seitlichen Rückblickspiegel (7) stützenden Spiegelgehäuses (1) angeordnet ist, **dadurch gekennzeichnet, dass** der Luftleitring (3) und der Spiegelfuß (2) miteinander fest verbunden oder zumindest zueinander fixiert sind, so dass weder der Luftleitring (3) noch der Spiegelfuß (2) verstellbar sind, und der Spiegelfuß (2) über eine Lagefindungseinrichtung lagegenau an der Karosseriewand anzuordnen und über wenigstens ein Befestigungselement (9) an der Karosseriewand zu befestigen ist.

2. Außenspiegel nach Anspruch 1, **dadurch gekennzeichnet, dass** die Lagefindungseinrichtung wenigstens zwei Lagefindungselemente (8, 9) aufweist.

3. Außenspiegel nach Anspruch 1 oder 2, **dadurch gekennzeichnet, dass** wenigstens ein Lagefndungselement ein durch eine Durchtrittsöffnung an der Karosseriewand hindurch in eine Stiftöffnung im Spiegelfuß eingesteckter Fixierstift (8) oder eine Befestigungsschraube (9) ist, die durch eine Zentrieröffnung an der Karosseriewand hindurch in ein Gewinde im Spiegelfuß einschraubbar ist, oder ein am Spiegelfuß oder an der Karosseriewand ausgebildetes oder angeordnetes Zentrierelement ist, das mit einem Gegenzentrierelement an dem anderen Teil, an der Karosseriewand oder an dem Spiegelfuß zusammen wirkt.

4. Außenspiegel nach einem der Ansprüche 1 bis 3, **dadurch gekennzeichnet, dass** das Befestigungselement eine Befestigungsschraube (9) ist, oder zusätzlich die Befestigungsschraube (9) ein Lagefindungselement der Lagefindungseinrichtung ist.

5. Außenspiegel nach einem der Ansprüche 1 bis 4, **dadurch gekennzeichnet, dass** in dem Spiegelfuß (2) eine von einer Zuleitungsöffnung in der Karosseriewand durch den Luftleitring (3) und einen Steg in das Spiegelgehäuse (1) mündende Durchgangsöffnung (10) ausgebildet ist, über die eine Stromleitung (11) und/oder wenigstens ein Spiegelverstellelement mit einer manuellen oder motorischen Verstelleinrichtung im Spiegelgehäuse (1) verbunden ist, die aktiviert den Rückblickspiegel (7) verstellt.

6. Außenspiegels nach einem der Ansprüche 1 bis 5, **dadurch gekennzeichnet, dass** der winkelmäßig in eine Mittellage eingestellte Rückblickspiegel (7) mit einem Abstand hinter dem hinteren Rand (6) des Spiegelgehäuses (1) und mit einem Abstand vor dem hinteren Rand (5) des Luftleitringes (3) angeordnet ist.

7. Außenspiegel nach einem der Ansprüche 1 bis 6, **dadurch gekennzeichnet, dass** der Rückblickspiegel (7) eine etwa dem Umriss des hinteren Randes (6) des Spiegelgehäuses (1) entsprechende Spiegelfläche aufweist.

8. Außenspiegels nach einem der Ansprüche 1 bis 7, **dadurch gekennzeichnet, dass** zwischen dem hinteren Rand (6) des Spiegelgehäuses (1) und dem Umfangsrand des Rückblickspiegels (7) ein Faltenbalg (13) angeordnet ist, der einerseits an dem Spiegelgehäuse (1) und andererseits an dem Umfangsrand des Rückblickspiegels (7) befestigt oder abgestützt, beispielsweise verclipst ist.

9. Außenspiegel nach einem der Ansprüche 1 bis 8, **dadurch gekennzeichnet, dass** der Spiegelfuß (2) an seinem vorderen Rand (2v) etwa halbzylinderförmig mit einem großen Radius und an seinem hinteren Rand (2h) etwa halbzylinderförmig mit einem kleinen Radius ausgebildet ist.

10. Außenspiegel nach einem der Ansprüche 1 bis 9, **dadurch gekennzeichnet, dass** der etwa halbzylinderförmige vordere Rand (2v) des Spiegelfußes (2) und der etwa halbzylinderförmige hintere Rand (2h) des Spiegelfußes (2) seitlich innen und/oder außen über ein zur Umgebung konvexes bzw. etwa ebenes Flächenteil (2Fa, 2Fi) verbunden sind.

11. Außenspiegel nach einem der Ansprüche 1 bis 10, **dadurch gekennzeichnet, dass** der Luftleitring (3) an einem oberen vorderen Randbereich und/oder an einem unteren vorderen Randbereich eine kerbförmige Ausnehmung (14, 17) mit einem gerundeten Kerbgrund (15, 18) aufweist, oder zusätzlich der seitlich außen an den Kerbgrund (15, 18) angrenzende Bereich (16, 19) der kerbförmigen Ausnehmung (14, 17) etwa gerade ausgebildet ist und seitlich nach außen und vorne gerichtet in einem spitzen Winkel zu einer ideellen Fahrzeugquerachse angeordnet ist.

12. Außenspiegel nach einem der Ansprüche 1 bis 11, **dadurch gekennzeichnet, dass** das Spiegelgehäuse (1) nach oben und unten und nach vorne konvex gekrümmt ausgebildet ist, oder zusätzlich der Luftleitring (3) bereichsweise oder insgesamt im Bereich des Luftspalts (4) an die Kontur des Spiegelgehäuses (1) angepasst ist.

13. Außenspiegel nach einem der Ansprüche 1 bis 12, **dadurch gekennzeichnet, dass** sich der Luftleitring (3) etwa über 30 bis 70 % der Länge des Spiegelgehäuses (1) in Fahrtrichtung des Kraftfahrzeugs erstreckt.

14. Außenspiegel nach einem der Ansprüche 1 bis 13, **dadurch gekennzeichnet, dass** in der mittleren Winkellage des Rückblickspiegels (7) der hintere Rand (5) des Luftleitringes (3) etwa 5 bis 30 mm hinter dem Rückblickspiegel (7) angeordnet ist.

15. Außenspiegel nach einem der Ansprüche 1 bis 14, **dadurch gekennzeichnet, dass** der Luftspalt (4) einen Abstand zwischen dem Luftleitring (3) und der benachbarten Fläche des Spiegelgehäuses (1) von etwa 5 bis 10 mm aufweist.

16. Außenspiegel nach einem der Ansprüche 1 bis 15, **dadurch gekennzeichnet, dass** der Luftleitring (3) an seinem vorderen und hinteren Randbereich einen zur Umgebung konvexen Radius von wenigstens 2,5 mm aufweist.

17. Außenspiegel nach einem der Ansprüche 1 bis 16, **dadurch gekennzeichnet, dass** das Spiegelgehäuse wenigstens zwei Spiegelgehäuseteile aufweist, die miteinander lösbar verbunden sind, von denen ein Spiegelgehäuseteil mit dem Spiegelfuß fest verbunden ist.

## Claims

1. An exterior mirror of a motor vehicle, comprising a mirror casing (1) which is fastened to a wall of the bodywork by a mirror base (2) and is connected by webs to an air guiding ring (3) which surrounds a region of the mirror casing (1) while forming an air gap (4) between the air guiding ring (3) and the mirror casing (1), the rear edge (5) of the air guiding ring (3) being arranged at a distance behind the rear edge (6) of the mirror casing (1) which supports a side rear view mirror (7), **characterised in that** the air guiding ring (3) and the base (2) of the mirror are rigidly interconnected or are at least fixed to one another so that neither the air guiding ring (3) nor the base (2) of the mirror is adjustable, and the base (2) of the mirror is to be arranged in a positionally accurate manner on the bodywork wall by a position finding device and is to be fastened to the bodywork wall by at least one fastening element (9).

2. An exterior mirror according to claim 1, **characterised in that** the position finding device has at least two position finding elements (8, 9).

3. An exterior mirror according to claim 1 or claim 2, **characterised in that** at least one position finding element is a fixing pin (8) which is inserted into a pin opening in the base of the mirror through a passage opening in the bodywork wall, or is a fastening screw (9) which can be screwed into a thread in the base of the mirror through a centring opening in the bodywork wall, or is a centring element which is formed or arranged on the base of the mirror or on the bodywork wall and cooperates with an opposite centring element on the other part, on the bodywork wall or on the base of the mirror.

4. An exterior mirror according to any one of claims 1 to 3, **characterised in that** the fastening element is a fastening screw (9) or in addition the fastening screw (9) is a position finding element of the position finding device.

5. An exterior mirror according to any one of claims 1 to 4, **characterised in that** formed in the base (2) of the mirror is a passage opening (10) which opens into the mirror casing (1) from an inlet line in the bodywork wall through the air guiding ring (3) and a web and by which a power line (11) and/or at least one mirror adjusting element is connected to a manual or motorised adjusting device in the mirror casing (1), which adjusting device, when activated, adjusts the rear view mirror (7).

6. An exterior mirror according to any one of claims 1 to 5, **characterised in that** the rear view mirror (7), angularly adjusted into a central position, is arranged at a distance behind the rear edge (6) of the mirror casing (1) and at a distance in front of the rear edge (5) of the air guiding ring (3).

7. An exterior mirror according to any one of claims 1 to 6, **characterised in that** the rear view mirror (7) has a mirror surface which approximately corresponds to the contour of the rear edge (6) of the mirror casing (1).

8. An exterior mirror according to any one of claims 1 to 7, **characterised in that** arranged between the rear edge (6) of the mirror casing (1) and the peripheral edge of the rear view mirror (7) are bellows (13) which are fastened or supported, for example clipped, on the mirror casing (1) on one hand and on the peripheral edge of the rear view mirror (7) on the other.

9. An exterior mirror according to any one of claims 1 to 8, **characterised in that** the base (2) of the mirror is formed on its front edge (2v) with a large radius in an approximately semi-cylindrical shape and is formed on its rear edge (2h) with a small radius in an approximately semi-cylindrical shape.

10. An exterior mirror according to any one of claims 1 to 9, **characterised in that** the approximately semi-cylindrical front edge (2v) of the base (2) of the mirror and the approximately semi-cylindrical rear edge (2h) of the base (2) of the mirror are connected laterally internally and/or externally by a surface part (2Fa, 2Fi) which is convex or approximately planar with respect to the surroundings.

11. An exterior mirror according to any one of claims 1 to 10, **characterised in that** the air guiding ring (3) has a notch-shaped recess (14, 17) with a rounded notch base (15, 18) on an upper front edge region and/or on a lower front edge region, or in addition the region (16, 19), laterally adjoining the exterior of the notch base (15, 18), of the notch-shaped recess (14, 17) is approximately straight and is arranged, directed outwards and forwards, laterally at an acute angle to an ideal vehicle transverse axis.

12. An exterior mirror according to any one of claims 1 to 11, **characterised in that** the mirror casing (1) is formed in a convexly curved manner upwards, downwards and forwards, or in addition the entire air guiding ring (3) or regions thereof is/are adapted to the contour of the mirror casing (1) in the region of the air gap (4).

13. An exterior mirror according to any one of claims 1 to 12, **characterised in that** the air guiding ring (3) extends approximately over 30 to 70 % of the length of the mirror casing (1) in the direction of travel of the motor vehicle.

14. An exterior mirror according to any one of claims 1 to 13, **characterised in that** in the central angular position of the rear view mirror (7), the rear edge (5) of the air guiding ring (3) is arranged approximately 5 to 30 mm behind the rear view mirror (7).

15. An exterior mirror according to any one of claims 1 to 14, **characterised in that** the air gap (4) has a distance of approximately 5 to 10 mm between the air guiding ring (3) and the adjacent surface of the mirror casing (1).

16. An exterior mirror according to any one of claims 1 to 15, **characterised in that** the air guiding ring (3) has on its front and rear edge region a radius which is convex with respect to the surroundings, of at least 2.5 mm.

17. An exterior mirror according to any one of claims 1 to 16, **characterised in that** the mirror casing has at least two casing parts which are interconnected in a releasable manner, one casing part of which is rigidly connected to the base of the mirror.

## Revendications

1. Rétroviseur extérieur d'un véhicule comprenant un boîtier de rétroviseur (1) qui est fixé à une paroi de la carrosserie par l'intermédiaire d'un pied de rétroviseur (2), et est relié par l'intermédiaire de traverses à un anneau de guidage de l'air (3) qui entoure une zone du boîtier de rétroviseur (1) en formant un intervalle d'air (4) entre l'anneau de guidage de l'air (3) et le boîtier de rétroviseur (1), le bord arrière (5) de l'anneau de guidage de l'air (3) étant situé à distance à l'arrière du bord arrière (6) du boîtier de rétroviseur (1) sur lequel s'appuie un miroir de rétroviseur latéral (7),
**caractérisé en ce que**
l'anneau de guidage de l'air (3) et le pied de rétroviseur (2) sont reliés rigidement ou au moins fixés l'un à l'autre de sorte que ni l'anneau de guidage de l'air (3), ni le pied de rétroviseur (2) ne puissent être réglés, et le pied de rétroviseur (2) est destiné à être monté dans une position précise sur la paroi de la carrosserie par l'intermédiaire d'un dispositif de recherche de position, et est destiné à être fixé à la paroi de la carrosserie par l'intermédiaire d'au moins un élément de fixation (9).

2. Rétroviseur extérieur conforme à la revendication 1,
**caractérisé en ce que**
le dispositif de recherche de position comprend au moins deux éléments de recherche de position (8, 9).

3. Rétroviseur extérieur conforme à la revendication 1 ou 2,
**caractérisé en ce qu'**
au moins un élément de recherche de position est une vis de fixation (9) ou une broche de fixation (8) enfichée au travers d'une ouverture de passage de la paroi de la carrosserie dans une ouverture de broche du pied du rétroviseur, qui peut être vissée au travers d'une ouverture de centrage de la paroi de la carrosserie, dans un filetage réalisé dans le pied de rétroviseur, ou un élément de centrage réalisé ou formé sur le pied de rétroviseur ou sur la paroi de la carrosserie qui coopère avec un élément de centrage antagoniste situé sur la paroi de la carrosserie ou le pied de rétroviseur.

4. Rétroviseur extérieur conforme à l'une des revendications 1 à 3,
**caractérisé en ce que**
l'élément de fixation est une vis de fixation (9), ou, la vis de fixation (9) est en outre un élément de recherche de position du dispositif de recherche de position.

5. Rétroviseur extérieur conforme à l'une des revendications 1 à 4,
**caractérisé en ce que**
dans le pied de rétroviseur (2) est formée une ouverture de passage (10) débouchant par une ouverture d'entrée dans la paroi de la carrosserie au travers de l'anneau de guidage de l'air (3) et par une traverse dans le boîtier de rétroviseur (1), et par l'intermédiaire de laquelle un conducteur de courant (11) et/ou au moins un élément de réglage du rétroviseur est relié à un élément de réglage manuel ou motorisé du boîtier de rétroviseur (1) qui en étant activé règle le miroir de rétroviseur (7).

6. Rétroviseur extérieur conforme à l'une des revendications 1 à 5,
**caractérisé en ce que**
le miroir de rétroviseur (7) réglé angulairement dans une position médiane est situé à distance à l'arrière du bord arrière (6) du boîtier de rétroviseur (1) et à distance à l'avant du bord arrière (5) de l'anneau de guidage de l'air (3).

7. Rétroviseur extérieur conforme à l'une des revendications 1 à 6,
**caractérisé en ce que**
le miroir de rétroviseur (7) a une surface de miroir correspondant essentiellement au contour du bord arrière (6) du boîtier de rétroviseur (1).

8. Rétroviseur extérieur conforme à l'une des revendications 1 à 7,
**caractérisé en ce qu'**
entre le bord arrière (6) du boîtier de rétroviseur (1) et le bord périphérique du miroir de rétroviseur (7) est monté un soufflet (13) qui est fixé ou s'appuie, et est par exemple clipsé d'une part sur le boîtier de rétroviseur (1) et d'autre part sur le bord périphérique du miroir de rétroviseur (7).

9. Rétroviseur extérieur conforme à l'une des revendications 1 à 8,
**caractérisé en ce que**
le pied de rétroviseur (2) a, au niveau de son bord avant (2v) une forme essentiellement semi-cylindrique de grand rayon et au niveau de son bord arrière (2h) avec une forme essentiellement semi-cylindrique de petit rayon.

10. Rétroviseur extérieur conforme à l'une des revendications 1 à 9,
**caractérisé en ce que**
le bord avant (2v) de forme essentiellement semi-cylindrique du pied de rétroviseur (2) et le bord arrière de forme essentiellement semi-cylindrique (2h) du pied de rétroviseur (2) sont reliés latéralement intérieurement et/ou extérieurement par l'intermédiaire d'une partie de surface (2Fa, 2Fi) convexe par rapport à l'environnement ou essentiellement plane.

11. Rétroviseur extérieur conforme à l'une des revendications 1 à 10,
**caractérisé en ce que**
l'anneau de guidage de l'air (3) comprend au niveau d'une zone de bord avant supérieure et/ou au niveau d'une zone de bord avant inférieure un évidement (14, 15) en forme d'entaille ayant une base arrondie (15, 18), ou, en outre, la zone (16, 19) de l'évidement (14, 17) en forme d'entaille située au voisinage latéralement à l'extérieur de la base (15, 18) est essentiellement rectiligne et positionnée latéralement en étant orientée vers l'extérieur et vers l'avant en faisant un angle aigu par rapport à un axe transversal idéal du véhicule.

12. Rétroviseur extérieur conforme à l'une des revendications 1 à 11,
**caractérisé en ce que**
le boîtier de rétroviseur (1) est recourbé de façon convexe vers le haut et le bas et vers l'avant, ou, en outre, l'anneau de guidage de l'air (3) est adapté par zones ou en totalité dans la zone de l'intervalle d'air (4) au contour du boîtier de rétroviseur (1).

13. Rétroviseur extérieur conforme à l'une des revendications 1 à 12,
**caractérisé en ce que**
l'anneau de guidage d'air (3) s'étend essentiellement sur 30 à 70% de la longueur du boîtier de rétroviseur (1) dans la direction de déplacement du véhicule.

14. Rétroviseur extérieur conforme à l'une des revendications 1 à 13,
**caractérisé en ce que**
dans la position angulaire médiane du miroir de rétroviseur (7) le bord arrière (5) de l'anneau de guidage de l'air (3) est situé à environ 5 à 30 mm en arrière du miroir de rétroviseur (7).

15. Rétroviseur extérieur conforme à l'une des revendications 1 à 14,
**caractérisé en ce que**
l'intervalle d'air (4) a une largeur entre l'anneau de guidage de l'air (3) et la surface voisine du boîtier de rétroviseur (1) égale à environ 5 à 10 mm.

16. Rétroviseur extérieur conforme à l'une des revendications 1 à 15,
**caractérisé en ce que**
l'anneau de guidage de l'air (3) a au niveau de sa zone de bord avant et de sa zone de bord arrière un rayon convexe vis-à-vis de l'extérieur égal à environ 2,5 mm.

17. Rétroviseur extérieur conforme à l'une des revendications 1 à 16,
**caractérisé en ce que**
le boîtier de rétroviseur comporte au moins deux parties de boîtier de rétroviseur qui sont reliées l'une à l'autre de façon amovible et dont l'une est reliée rigidement au pied de rétroviseur.
